# EUROPEAN PATENT APPLICATION

(11) **EP 2 654 281 A2**
(43) Date of publication of application: **23.10.2013**
(21) Application number: 11782997.8
(22) Date of filing: 25.05.2011
(51) Int. Cl.: H04M 3/54

(54) **COMMUNICATION METHOD, SYSTEM AND APPARATUS**

(71) Applicant: Huawei Technologies Co., Ltd., Shenzhen, Guangdong 518129 (CN)
(72) Inventor: HUANG, Tianzhen, Guangdong 518129 (CN); GU, Jiongjiong, Guangdong 518129 (CN)
(74) Representative: Goddar, Heinz J.
(86) International application number: PCT/CN2011/074651
(87) International publication number: WO 2011/144080

(57) **Abstract**

A communication method, system, and apparatus are applied to the field of communications technologies. The communication method includes: presetting first correspondence between a user identifier and an extension number in a VoIP server; after the VoIP server receives a call request, and if the call request contains a called extension number, acquiring a called user identifier according to the called extension number and the preset first correspondence; and sending the call request to a first client corresponding to the called user identifier, so that the first client is capable of forwarding a call to a voice communication telephone set connected to the first client. Therefore, communication inside an intranet, and between the intranet and an external network are implemented.

## Description

### FIELD OF THE INVENTION

The present invention relates to the field of communications technologies, and in particular, to a communication method, system, and apparatus.

### BACKGROUND OF THE INVENTION

At present, most enterprises use a private branch exchange (Private Branch Exchange, PBX) to perform telephone communication inside the enterprises, and complete telephone exchange inside the enterprises and between an enterprise network and a public telecommunication network.

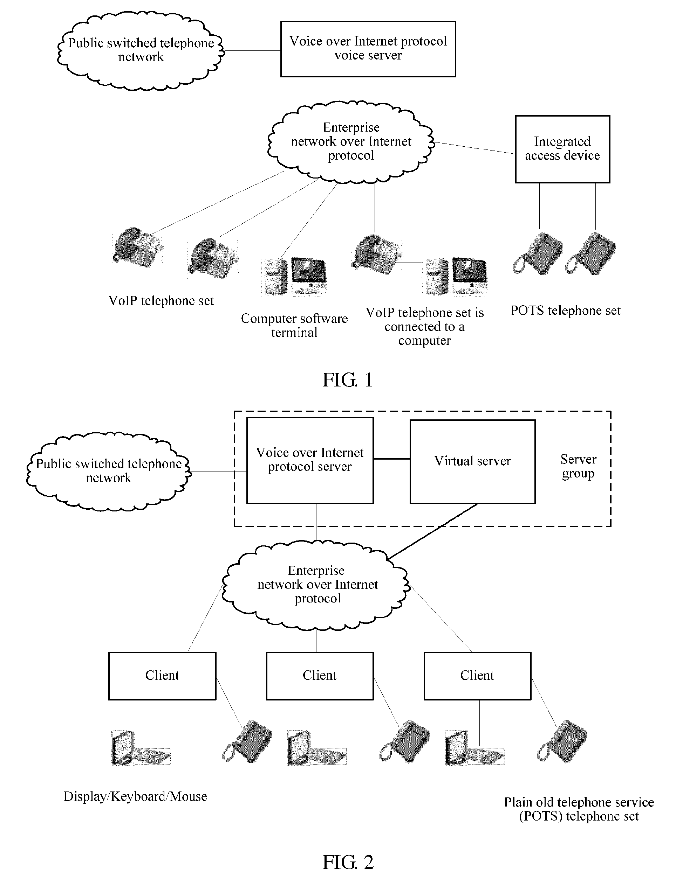

Due to wide application of computers inside an enterprise, a data network is formed inside the enterprise based on the Internet Protocol (IP). Referring to FIG. 1, an enterprise communication system where a technology based on voice over Internet Protocol (Voice over Internet Protocol, VoIP) is adopted is shown, including: a VoIP server, a VoIP telephone set, and a computer operation soft terminal.

The VoIP server connects to a public switched telephone network (Public Switched Telephone Network, PSTN) externally, and may connect to the VoIP telephone set and the computer operation soft terminal through a network cable internally, thereby implementing functions of a PBX technology and a VoIP technology. If the VoIP server does not have enough network ports to connect to the VoIP telephone set and the computer operation soft terminal, the VoIP telephone set may be first connected to a network port of the VoIP server, and then the VoIP telephone set provides a network port for connecting to the computer soft terminal. In this way, the computer soft terminal connects to the VoIP server through the VoIP telephone set, thereby implementing data and voice services based on the VoIP technology.

In this system, a plain old telephone service (Plain Old Telephone Service, POTS) telephone set may also be connected. Specifically, as no telephone line is arranged in this system, multiple POTS telephone sets need to be connected to the VoIP server through an integrated access device (Integrated Access Device, IAD), where the IAD device is used for switching between an IP network port and a telephone network port. And in this way, a voice service between the POTS telephone sets inside the enterprise and between the POTS telephone set and the PSTN network may be implemented.

When the POTS telephone set is used to implement the voice service in the foregoing enterprise communication system, it is required to allocate a corresponding extension number to each POTS telephone set, and then the call can be uniquely forwarded to a correct POTS telephone set. In prior art, the POTS telephone set is deployed at an office seat, so that the extension number is associated with the office seat, and when a user changes the office seat, the corresponding extension number is also changed, thereby bringing inconvenience to the user.

### SUMMARY OF THE INVENTION

Embodiments of the present invention provide a communication method, system, and apparatus, so as to solve a problem of inconvenient use brought by association between an extension number and an office seat in prior art.

An embodiment of the present invention provides a communication method, including:
receiving a call request, and if the call request contains a called extension number, acquiring a called user identifier corresponding to the called extension number according to the called extension number and preset first correspondence between a user identifier and an extension number; and
according to preset correspondence between a user identifier and a client, acquiring first client information corresponding to the called user identifier, and sending the call request to a first client, so that the first client forwards a call corresponding to the call request to a telephone set that has a voice communication function and is connected to the first client.

An embodiment of the present invention provides a thin client, including: a display screen, an interface connected to a mouse, and an interface connected to a keyboard. The thin client further includes: a telephone line interface connected to a voice communication telephone set, a call unit, and a forwarding unit, where
the call unit is configured to receive a call request sent by a voice over Internet protocol VoIP server, where the call request is sent after the VoIP server determines the thin client according to correspondence between a called extension number of a call corresponding to the call request and the client; and
the forwarding unit is configured to forward, according to the call request received by the call unit, the call request through the telephone line interface to a telephone set that has a voice communication function and is connected to the thin client; or forward, to the VoIP server, a call of a telephone set that has a voice communication function and is connected to the thin client.

An embodiment of the present invention provides a voice over Internet protocol VoIP server, including:
a call receiving unit, configured to receive a call request;
a user information acquisition unit, configured to, if the call request received by the call receiving unit contains a called extension number, acquire a called user identifier corresponding to the called extension number according to the called extension number in the call request and preset first correspondence between a user identifier and an extension number;
a client acquisition unit, configured to acquire, according to preset correspondence between a user identifier and client information, first client information corresponding to the called user identifier acquired by the user information acquisition unit; and
a call sending unit, configured to send the call request to a first client corresponding to the first client information acquired by the client acquisition unit, so that the first client forwards a call corresponding to the call request to a telephone set that has a voice communication function and is connected to the first client.

An embodiment of the present invention provides a communication system, including:
a voice over Internet protocol VoIP server, a virtual server, and at least one client, where the client is connected to the voice over Internet protocol VoIP server and the virtual server, and is further connected, through a telephone line interface, to a telephone set having a voice communication function:
   the client is configured to receive a call request sent by the VoIP server; forward, through the telephone line interface, a call corresponding to the call request to the telephone set that has the voice communication function and is connected to the client; and forward, to the VoIP server, a call of the telephone set that has the voice communication function and is connected to the client; and
   the voice over Internet protocol VoIP server is configured to receive the call request; wherein the call request contains a called extension number, acquire a called user identifier corresponding to the called extension number according to the called extension number in the call request and preset first correspondence between a user identifier and an extension number; acquire, according to preset correspondence between a user identifier and client information, first client information corresponding to the called user identifier acquired by a user information acquisition unit; and send the call request to a first client corresponding to the first client information acquired by a client acquisition unit.

In this embodiment, the first correspondence between the user identifier and the extension number is preset in the VoIP server; after the VoIP server receives the call request, if the called extension number is contained in the call request, the called user identifier is acquired according to the called extension number and the preset first correspondence; and the call request is sent to the first client corresponding to the called user identifier. In this way, the first client can forward the call to a telephone set such as a POTS telephone set that has a voice communication function and is connected to the first client. In this embodiment, an extension number in an intranet is not fixed at an office seat, but vary according to different users. In this way, when a user moves an office seat, although the voice communication telephone set such as the POTS telephone set used by the user is changed, an extension number is not changed, thereby solving the problem of inconvenient use brought by the association between the extension number and the office seat in the prior art.

### BRIEF DESCRIPTION OF THE DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic structural diagram of a communication system based on a VoIP technology in the prior art;
FIG. 2 is a schematic structural diagram of a communication system according to an embodiment of the present invention;
FIG. 3 is a flowchart of a communication method according to an embodiment of the present invention;
FIG. 4 is a flowchart of another communication method according to an embodiment of the present invention;
FIG. 5 is a flowchart of another communication method according to an embodiment of the present invention;
FIG. 6 is a flowchart of another communication method according to an embodiment of the present invention;
FIG. 7 is a flowchart of another communication method according to an embodiment of the present invention;
FIG. 8 is a flowchart of another communication method according to an embodiment of the present invention;
FIG. 9 is a schematic structural diagram of a thin client according to an embodiment of the present invention;
FIG. 10 is a schematic structural diagram of a VoIP server according to an embodiment of the present invention;
FIG. 11 is a schematic structural diagram of another VoIP server according to an embodiment of the present invention;
FIG. 12 is a schematic structural diagram of another VoIP server according to an embodiment of the present invention; and
FIG. 13 is a schematic structural diagram of another VoIP server according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are merely apart rather than all of the embodiments of the present invention. All other embodiments acquired by persons of ordinary skill in the art based on the embodiments of the present invention without creative efforts shall fall within the protection scope of the present invention.

An embodiment of the present invention provides a communication method, which is applicable to an enterprise network system shown in FIG. 2. The system includes a server group, multiple clients, a display/a keyboard/a mouse, and a telephone set having a voice communication function (hereinafter briefly referred to as voice communication telephone set), that is, a telephone set supporting voice communication, such as a POTS telephone set shown in FIG. 1. The server group may include a VoIP server and multiple virtual servers in a virtual desktop system, where a virtual server virtualizes a physical server into a logical server through a virtualization technology, and the VoIP server may connect to the virtual server to communicate. In this system, the VoIP server connects to a PSTN telephone network externally, and the VoIP server and the virtual servers connect to multiple clients internally through an enterprise IP network. The VoIP server is capable of implementing functions of a PBX technology and a VoIP technology. Each client is connected to the display/the keyboard/the mouse, and a telephone interface is further added to the client to connect to the voice communication telephone set. The user may operate the client through the display/the keyboard/the mouse.

In this embodiment, the VoIP server connects an intranet and an enterprise external network, implementing communication inside the intranet, and communication between the intranet and the enterprise external network. The intranet includes: a client, a virtual server, a voice communication telephone set, a display/a keyboard/a mouse, and so on, and the enterprise external network is a PSTN telephone network connected to the VoIP server.

If the client in the system is a thin client (Thin Client), the thin client may connect to the voice communication telephone set through a telephone line interface such as a registered jack (Registered Jack, RJ) 11. The thin client refers to a computer terminal basically needing no application program in a client-server network system, and it communicates with a server through some protocols to access a local area network. In this case, the thin client is only connected to the mouse and the keyboard and may transmit input from the mouse/the keyboard to the server for processing; then the server returns a processing result to the client for displaying.

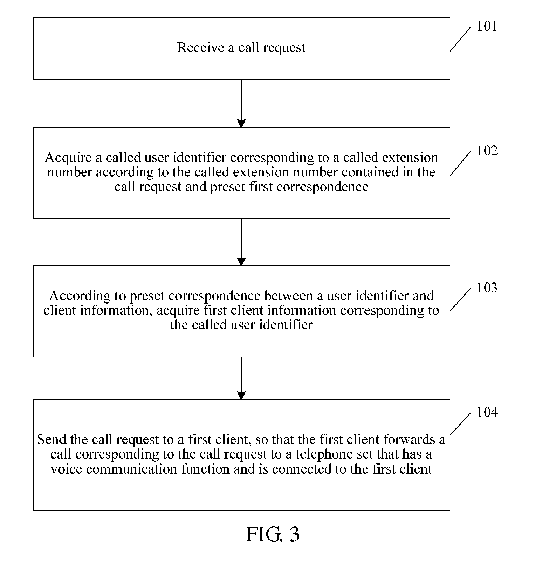

In this system, the VoIP server performs communication according to following steps, and the communication method in this embodiment is a communication method used when a voice communication telephone set in an enterprise network system is called. An example of a POTS telephone set is taken for illustration of the voice communication telephone set in this embodiment, and a flowchart is shown in FIG. 3, including:

Step 101: Receive a call request.

In this embodiment, the call request may be a request for a call between POTS telephone sets in the enterprise network system, and between a POTS telephone set and a PSTN telephone network. The call may be a call of the enterprise external network received by the VoIP server through the PSTN telephone network, and may also be a call of the POTS telephone set received by the VoIP server through the intranet.

If the call request is a call initiated to the POTS telephone set in the intranet, including a call initiated by the enterprise external network to the POTS telephone set and a call between POTS telephone sets in the intranet, the call request contains a called extension number in the intranet, and the VoIP server executes step 102. If the call request is a call initiated to the enterprise external network (that is, the PSTN telephone network), the VoIP server forwards the call request to the PSTN telephone network.

Step 102: Acquire a called user identifier corresponding to the called extension number according to the called extension number contained in the call request and preset first correspondence between a user identifier and an extension number.

In this embodiment, the VoIP server needs to allocate a corresponding extension number to each user of the intranet, and presets in the VoIP server first correspondence between each user identifier and the extension number, instead of allocating a fixed extension number to each office seat, so that the extension number and the office seat have no association relationship.

The VoIP server acquires the called user identifier by matching the called extension number with the preset first correspondence, and a user identifier corresponding to the matched extension number is the called user identifier.

Step 103: According to the preset correspondence between a user identifier and client information, acquire first client information corresponding to the called user identifier.

The virtual desktop system is deployed in the enterprise network system in this embodiment, and includes the client and the virtual server. When a user registers with a first virtual server through a first client, the user identifier and the first client information (for example, port information, identification information) may be sent to the first virtual server through a user register request, and then the first virtual server sends the user identifier and the corresponding first client information to the VoIP server for storage.

When receiving the user identifier and the corresponding first client information that are sent by the first virtual server, the VoIP server stores the user identifier and the corresponding first client information, allocates one extension number to the received user identifier, and stores first correspondence between the received user identifier and the allocated extension number.

It should be noted that, after the user moves the office seat, and when the user logs in to the first virtual server through another client, the user identifier of the user and information of the another client may be sent to the first virtual server through a user login request. In this way, after receiving the user login request, the first virtual server finds that the client sending the user login request is inconsistent with the first client corresponding to the user identifier stored in the first virtual server, and then the first virtual server needs to update the first client information stored in the first virtual server and modify the first client information into information of the client currently sending the user login request. The first virtual server sends updated correspondence between the user identifier and the information of the client sending the user login request to the VoIP server for updating; and the VoIP server may update the first client information, relevant to the user identifier which is used to log in to the first virtual server and is in a local storage, to client information for the user to log in to the first virtual server.

It can be seen that, in this step, when acquiring the first client information that is in the virtual desktop system and corresponds to the called user identifier, the VoIP server may specifically acquire the first client information corresponding to the called user identifier by searching the local storage.

Step 104: Send the call request to the first client corresponding to the first client information acquired in step 103, so that the first client forwards a call corresponding to the call request to a telephone set such as the POTS telephone set that has voice communication function (hereinafter briefly referred to as voice communication telephone set) and is connected to the first client.

After acquiring the first client information corresponding to the called user identifier, the VoIP server sends the call request to the corresponding first client. In this way, after receiving the call request, the first client forwards the call through a telephone path to a POTS telephone set connected to the first client, and specifically, forwards the call through a telephone interface such as an RJ11 of the first client to the POTS telephone set connected to the first client.

In this embodiment, the client in the virtual desktop system may be the thin client, and is connected to a voice communication telephone set such as the POTS telephone set through the telephone interface such as the RJ 11. The thin client refers to a computer terminal basically needing no application program in a client-server network system. In this embodiment, an interface connected to a telephone line is added to the thin client to connect to the voice communication telephone set such as the POTS telephone set.

It can be seen that, in this embodiment, the first correspondence between the user identifier and the extension number is preset in the VoIP server; after the VoIP server receives the call request, if the called extension number is contained in the call request, the called user identifier is acquired according to the called extension number and the preset first correspondence; and the call request is sent to the first client corresponding to the called user identifier. In this way, the first client may forward the call to the telephone set that has the voice communication function and is connected to the first client. In this embodiment, an extension number in the intranet is not fixed at an office seat, but vary according to different users. In this way, when the user moves the office seat, although a voice communication telephone set used by the user is changed, the extension number is not changed, thereby solving a problem of inconvenient use brought by association between the extension number and the office seat in prior art.

Moreover, in this embodiment, the client may be directly connected to the voice communication telephone set, and forward the call to the voice communication telephone set, so that an additional IAD device is not required in the system to connect the voice communication telephone set and an enterprise IP network system, thereby simplifying a structure of the system.

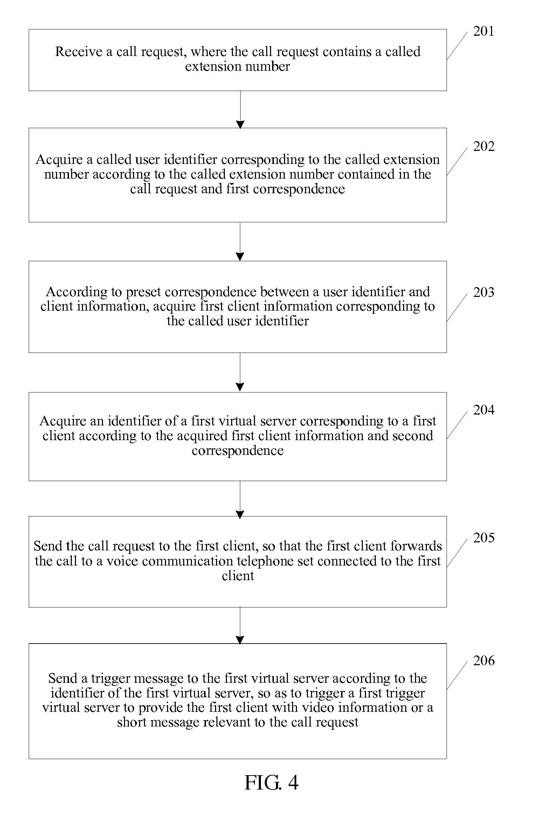

Referring to FIG. 4, in a specific embodiment, a communication method in this embodiment is a method in which when a voice communication telephone set in an enterprise network system is called to implement voice communication, it is required to trigger a virtual server and a client which are associated with the voice communication telephone set to implement data service communication. An example of a POTS telephone set is taken for illustration of the voice communication telephone set in this embodiment, and a VoIP server performs communication through steps 201 to 206 in the following.

Step 201: Receive a call request, where the call request contains a called extension number.

The call request in this embodiment is a call initiated to the POTS telephone set in an intranet, and the call request contains the called extension number in the intranet.

Step 202: Acquire a called user identifier corresponding to the called extension number according to the called extension number contained in the call request and preset first correspondence between a user identifier and an extension number.

Step 203: According to preset correspondence between a user identifier and client information, acquire first client information corresponding to the called user identifier.

Step 204: Acquire an identifier of a first virtual server corresponding to a first client according to the acquired first client information and preset second correspondence in a virtual desktop system between client identification information and virtual server identification information.

It can be understood that, the virtual desktop system is deployed in the intranet, and includes a client and a virtual server, where the virtual server is configured to execute an underlying operation of an application, and provide the client with a virtual desktop for executing the application. The client sends a specific operation instruction to control the virtual server to perform application execution.

After a client of each user in an enterprise registers with the virtual server, the virtual server may send, to the VoIP server, a user identifier and client information (for example, information such as a port number of the client or a device identifier of the client) registered by the client; and the VoIP server may store correspondence between the client identification information and virtual server identification information. It should be noted that, after the user moves an office seat and logs in to the virtual server through another client, the virtual server may send, to the VoIP server, a user identifier of the user and client information for logging in to the virtual server; and the VoIP server updates client information, in the stored second correspondence relevant to the user identifier, to the client information for logging in to the virtual server by the user.

The VoIP server may match the client information acquired in step 203 with the second correspondence to acquire a virtual server identifier.

Step 205: Send the call request to the first client corresponding to the first client information acquired in step 203, so that the first client forwards a call corresponding to the call request to the voice communication telephone set such as the POTS telephone set, where the voice communication telephone set is connected to the first client.

Step 206: Send a trigger message to the corresponding first virtual server according to the acquired first virtual server identifier, where the trigger message is used to trigger a first trigger virtual server to provide the first client with video information or a short message relevant to the call request.

The trigger message sent by the VoIP server herein may contain the first client information, for example, information such as a device identifier or an address identifier of the first client. The trigger message further contains information of the call corresponding to the call request, for example, video information or voice information transmitted after the call is connected. The first client information may be acquired by parsing the call request. The information of the call corresponding to the call request may be acquired, after the call is established, from service data transmitted through the call. And the information of the call corresponding to the call request may also be acquired according to the call request.

In this way, after receiving the trigger message, the first virtual server provides the video information for the corresponding first client, and may also provide information relevant to the call for the corresponding first client through the short message, thereby implementing data service information transmission between the virtual server and the client.

It can be understood that, when the VoIP server executes the foregoing steps 205 and 206, there is no absolute sequential relationship, and FIG. 4 only shows a specific example. Through the foregoing steps 201 to 206, when the voice communication telephone set such as the POTS telephone set, answers the call, the VoIP server may send the trigger message to the associated virtual server to make the virtual server and the client work together, so that the voice communication telephone set such as the POTS telephone set and the client in the enterprise network system are combined to perform communication. In this way, not only a voice service may be implemented through the voice communication telephone set, but also a data service may be implemented through the virtual server and the client.

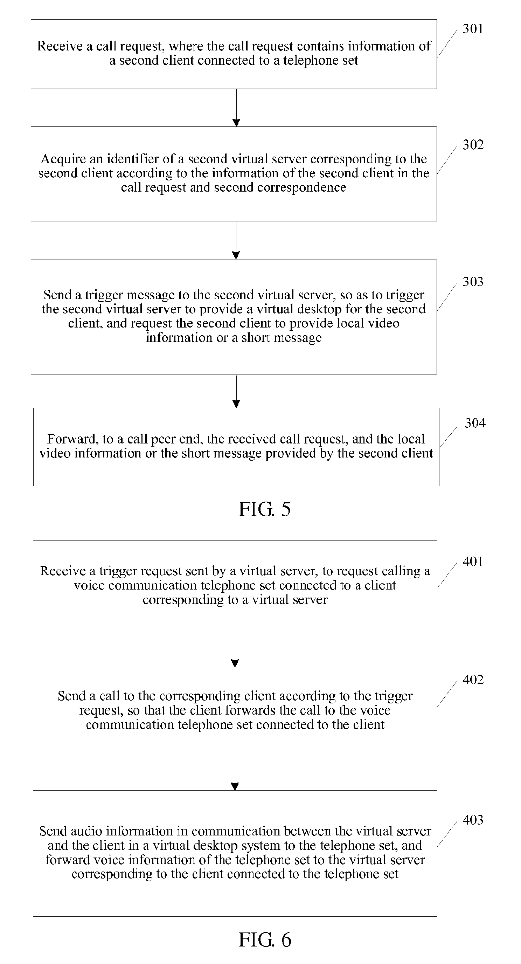

Referring to FIG. 5, in another specific embodiment, a communication method in this embodiment is a method in which when a voice communication telephone set in an enterprise network system actively initiates a call to implement voice service communication, it is required to trigger a virtual server and a client that are associated with the voice communication telephone set to implement data service communication. An example of a POTS telephone set is taken for illustration of the voice communication telephone set in this embodiment, and a VoIP server performs communication through steps 301 to 304 in the following.

Step 301: The VoIP server receives a call request, where the call request contains information of a second client connected to a voice communication telephone set such as a POTS telephone set actively initiating a call.

In this embodiment, the call request is a call actively initiated by the POTS telephone set in an intranet, the second client connected to the POTS telephone set actively initiating a call may send the call request to the VoIP server, where the call request contains the information of the second client sending the call request.

Step 302: The VoIP server acquires an identifier of a second virtual server corresponding to the second client according to the information of the second client in the call request and preset second correspondence in a virtual desktop system between client identification information and virtual server identification information.

The preset second correspondence herein is similar to the second correspondence in the foregoing step 204, so the details are not described herein again.

Step 303: The VoIP server sends a trigger message to the corresponding second virtual server according to the acquired identifier of the second virtual server, where the trigger message is used to trigger the second virtual server to provide a virtual desktop for the second client, for requesting the second client to provide local video information or a short message.

The sent trigger message herein may include the information of the second client, for example, information such as a device identifier or an address identifier of the second client, where the information of the second client may be acquired by parsing call request received in step 301. That the trigger message requests triggering the second client to provide the local video information or the short message is specifically: requesting triggering sending of data service information by the second client connected to the POTS telephone set actively initiating a call, and then, the local video information or the short message which the trigger message requests triggering the second client to provide is the data service information.

In this way, after receiving the trigger message, the second virtual server provides a virtual desktop for the corresponding second client, and the provided local video information or the short message is displayed on the virtual desktop.

After the second client provides the local video information or the short message to the second virtual server through the virtual desktop, the second virtual server sends, to the VoIP server, the local video information or the short message provided by the second client.

Step 304: The VoIP server receives the local video information or the short message provided by the second client, and forwards, to a call peer end, the call request received in step 301 and the local video information or the short message provided by the second client, where the local video information or the short message provided by the second client is sent by the second virtual server.

If the call request is a request that the POTS telephone set in the intranet calls an enterprise external network (that is, a PSTN telephone network), the VoIP server may forward the local video information or the short message provided by the second client and the call request to the call peer end in the enterprise external network. If the call request is a call between POTS telephone sets in the intranet, the VoIP server forwards, through the second virtual server to a client connected to the called POTS telephone set, the local video information or the short message provided by the second client connected to the POTS telephone set actively initiating a call, and forwards the call request to the called POTS telephone set corresponding to the client.

It can be understood that, in this embodiment, when the voice communication telephone set such as a POTS telephone set in the intranet is dialed to call, the VoIP server may send the trigger message to the associated virtual server to make the virtual server and the client work together, so that the voice communication telephone set such as a POTS telephone set and the client in the enterprise network system are combined to perform communication. In this way, a voice service may be implemented through the voice communication telephone set such as a POTS telephone set, and a data service may also be implemented through the virtual server and the client.

It should be noted that, the first client and the second client do not imply a sequential relationship, but indicate different clients. And the first virtual server and the second virtual server do not imply a sequential relationship, but indicate different virtual servers.

Referring to FIG. 6, in another specific embodiment, in addition to performing communication through procedures shown in FIG. 3 to FIG. 5, a VoIP server may also perform communication through steps 401 to 403 in the following. A communication method in this embodiment is a communication method in which when a client performs data service communication with a virtual server in a virtual desktop system of an enterprise network system, it is required to trigger a voice communication telephone set associated with the client to perform a voice service. An example of a POTS telephone set is taken for illustration of the voice communication telephone set in this embodiment.

Step 401: The VoIP server receives a trigger request sent by a virtual server in the virtual desktop system, where the trigger request is used to request triggering the VoIP server to call a voice communication telephone set such as a POTS telephone set connected to a client corresponding to the virtual server.

The virtual desktop system in an intranet includes a virtual server and a client, where the virtual server is configured to execute an underlying operation of an application, and provide the client with a virtual desktop for executing the application. The client sends a specific operation instruction to control the virtual server to perform application execution.

A user may operate the client through a display/a keyboard/a mouse, so that the client performs communication with the virtual server. In this way, the client may implement multiple applications through the virtual server, for example, the client performs communication with the virtual server to implement applications such as graph processing. The client may also perform communication with another client through the virtual server, for example, the client in the intranet performs a communication service such as a QQ video or a QQ audio call with another client in an enterprise external network, or two clients in the intranet perform a communication service such as a QQ video or a QQ audio call between each other. If in a communication process there is audio information needs to be transmitted, such as background music for executing an application program or voice information of another client in QQ communication, the virtual server in the virtual desktop system may send a trigger request to the VoIP server in the intranet, so as to call a POTS telephone set connected to a client performing communication in the virtual desktop system, and use the POTS telephone set to transmit the audio information.

The received trigger request herein contains client information such as a device identifier or an address identifier of the client, where the trigger request contains the client in the intranet, and the client is currently performing communication with the virtual server to transmit audio information.

Step 402: The VoIP server sends a call to the corresponding client according to the client information contained in the trigger request, so that the client forwards the call to the voice communication telephone set connected to the client.

The trigger request contains the client information, so when the VoIP server sends the call, the call is sent according to the client information contained in the trigger request. After the client receives the call, the call is forwarded to the voice communication telephone set connected to the client. In this way, after the voice communication telephone set is picked up, a call channel may be established, and the audio information may be transmitted through the call channel.

Step 403: The VoIP server sends audio information in a communication process between the virtual server and the client in the virtual desktop system to the voice communication telephone set such as the POTS telephone set through the channel of the call forwarded in step 402, and forwards voice information, generated by the voice communication telephone set, to the virtual server corresponding to the client connected to the voice communication telephone set.

Specifically, for the audio information, for example, information such as the background music for executing the application program and voice information of another client in QQ communication, in communication performed by the client and the virtual server, the virtual server may send the audio information to the VoIP server, and the VoIP server forwards the audio information to the POTS telephone set connected to the client.

If there is audio information in a communication process performed by the client in the virtual desktop system with another client through the virtual server, the user may generate voice information through the POTS telephone set, and the client connected to the POTS telephone set may send the generated voice information to the VoIP server. The VoIP server finds, according to preset second correspondence in the virtual desktop system between client identification information and virtual server identification information, an identifier of the virtual server corresponding to the client sending the voice information, and sends the voice information of the POTS telephone set to the virtual server according to the found identifier of the virtual server. In this way, the virtual server may send the voice information generated by the POTS telephone set to another client.

The preset second correspondence herein is similar to the second correspondence in the foregoing step 204, so the details are not described herein again.

It can be understood that, in this embodiment, when the client in the intranet performs data service communication with the virtual server, the VoIP server may receive the trigger request sent by the virtual server, and call, according to the trigger request, the voice communication telephone set such as a POTS telephone set connected to the corresponding client to work together, for example, to receive audio information through the POTS telephone set, or to generate audio information through a microphone of the POTS telephone set, so that the POTS telephone set and the client in the enterprise network system are combined to perform communication.

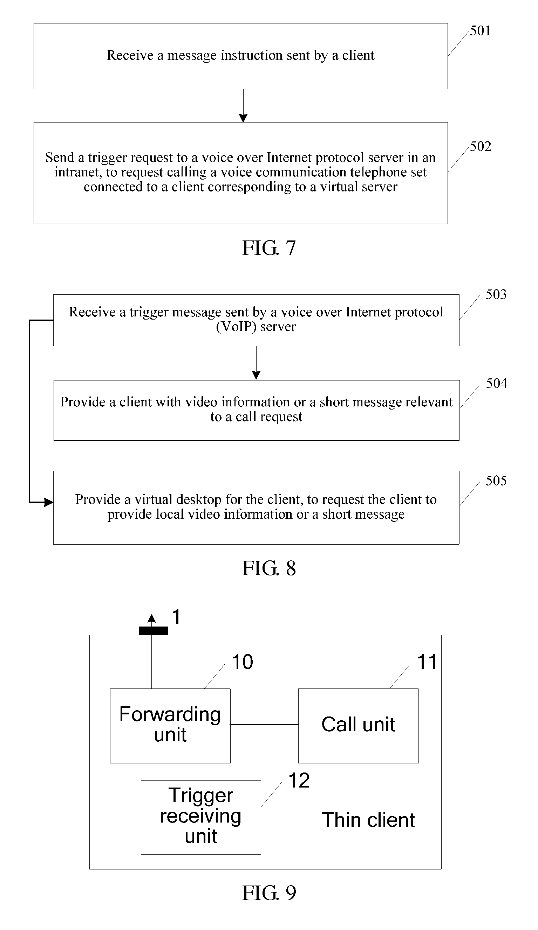

An embodiment of the present invention further provides a communication method, and the communication method of this embodiment is a method in which when a client performs data service communication with a virtual server in a virtual desktop system of an enterprise network system, it is required to trigger a voice communication telephone set associated with the client to perform a voice service; and the method is applicable to the enterprise network system shown in FIG. 2. The virtual server in the virtual desktop system deployed in the system may perform communication according to following steps. An example of a POTS telephone set is taken for illustration of the voice communication telephone set in this embodiment, where a flowchart is shown in FIG. 7, and includes:

Step 501: Receive a message instruction sent by a client.

The virtual desktop system is deployed in the enterprise network system in this embodiment, and includes a client and a virtual server. Each user in an enterprise operates the client through a display/a keyboard/a mouse. Before the client performs communication with the virtual server, the client needs to register with the virtual server. Specifically, the client may send a user register request to the virtual server, where the user register request contains a user identifier of the user, and information such as port information or identification information of the registering client. The virtual server may store the user identifier and the information of the registering client, and further send the user identifier and the information of the client to a VoIP server for corresponding storage.

In this way, a user may send the message instruction to the virtual server through the client, so that the client performs communication with the virtual server. In this way, the client may implement multiple applications through the virtual server, for example, the client performs communication with the virtual server to implement applications such as graph processing. Moreover, the client may also perform communication with another client through the virtual server, for example, a client in an intranet performs a communication service such as a QQ video or a QQ audio call with another client in an enterprise external network, or two clients in the intranet perform communication services such as a QQ video or a QQ audio call between each other.

Step 502: When there is audio information to be transmitted, send a trigger request to the VoIP server in the intranet, where the trigger request is used to request triggering the VoIP server to call the voice communication telephone set such as a POTS telephone set connected to the client corresponding to the virtual server.

If in a communication process between the client and the virtual server, there is audio information that needs to be transmitted, such as background music for executing an application program or audio information of another client in QQ communication, the virtual server in the virtual desktop system may send the trigger request. In this way, after the VoIP server receives the trigger request, its implementation manner is similar to the implementation manner in the foregoing steps 401 to 403, so the details are not described herein again.

As an optional implementation manner, an implementation manner of an embodiment shown in FIG. 7 may be combined with implementation manners shown in FIG. 3 to FIG. 5, so as to implement various communication manners at the same time when an extension number is associated with a user identifier.

It can be seen that, in this embodiment, when the client in the intranet performs communication with the virtual server, if there is audio information to be transmitted, the virtual server may send the trigger request to the VoIP server, so as to call a voice communication telephone set such as a POTS telephone set connected to the corresponding client in the virtual desktop system to work together, for example, to receive the audio information through the POTS telephone set, or generate the audio information through a microphone of the POTS telephone set, so that the voice communication telephone set such as the POTS telephone set and the client in the enterprise network system are combined to perform communication.

Referring to FIG. 8, in a specific embodiment, a virtual server may further execute following steps, and a communication method of this embodiment is a method in which, when a voice communication telephone set in an enterprise network system actively initiates a call, or when the voice communication telephone set in the enterprise network system is called to implement voice service communication, it is required to trigger a virtual server and a client which are associated with the voice communication telephone set to implement data service communication. An example of a POTS telephone set is taken for illustration of the voice communication telephone set in this embodiment.

Step 503: Receive a trigger message sent by a VoIP server.

It can be understood that, after the VoIP server receives a call request, if the call request contains a call forwarding process in an intranet, the VoIP server to the virtual service may send a trigger message, and if the call request received by the VoIP server is a call initiated to a POTS telephone set in the intranet, the trigger message sent by the VoIP server is used to trigger the virtual server to provide a client with video information or a short message relevant to the call. In this case, the trigger message contains client information and information of a call corresponding to the call request, and the virtual server executes step 504.

If the call request received by the VoIP server is actively initiated by a POTS telephone set in the intranet, the trigger message sent by the VoIP server is used to trigger the virtual server to provide a virtual desktop for a client, and local video information or a short message requested to be provided by the client is displayed on the virtual desktop. In this case, the trigger message contains client information, and the virtual server executes step 505.

Step 504: Provide the client with the video information or the short message relevant to the call request.

The virtual server may provide the video information for the client corresponding to the client information contained in the trigger message, and may also provide information relevant to the call for the corresponding client through the short message.

Step 505: Provide the virtual desktop for the client, to request the client to provide the local video information or the short message, and send, to the VoIP server, the local video information or the short message provided by the client.

It can be understood that, after receiving the local video information or the short message, the VoIP server forwards the local video information or the short message, together with the call request, to a peer end called by using the call request.

As an optional implementation manner, the implementation manner of the embodiment shown in FIG. 8 may be combined with implementation manners shown in FIG. 3 to FIG. 5, so as to implement various communication manners at the same time when an extension number is associated with a user identifier.

It can be seen that, in this embodiment, when the voice communication telephone set such as the POTS telephone set in the intranet is dialed to call, the VoIP server may send the trigger message to the associated virtual server to make the virtual server and the client work together, so that the voice communication telephone set such as the POTS telephone set and the client in the enterprise network system are combined to perform communication. In this way, not only a voice service may be implemented through the voice communication telephone set such as the POTS telephone set, but also a data service may also be implemented through the virtual server and the client.

An embodiment of the present invention further provides a thin client, of which a schematic structural diagram is shown in FIG. 9, including a display screen (not drawn in the drawing), an interface connected to a mouse and a keyboard, a telephone line interface 1 connected to a voice communication telephone set such as a plain old telephone service POTS telephone set, a call unit 10, and a forwarding unit 11.

The display screen is configured to display a virtual desktop provided by a virtual server; and may receive, through the interface connected to the mouse and the keyboard, an operating instruction from a user through the mouse and the keyboard.

The call unit 10 is configured to receive a call request sent by a VoIP server, where the call request is sent after the VoIP server determines the thin client according to correspondence between a called extension number of a call corresponding to the call request and the client.

The forwarding unit 11 is configured to forward, according to the call request received by the call unit 10, the call request through the telephone line interface 1 to a telephone set that has a voice communication function and is connected to the thin client; or forward, to the VoIP server, a call of a telephone set that has a voice communication function and is connected to the thin client.

In a specific embodiment, the thin client may further include: a trigger receiving unit 12, configured to receive the virtual desktop sent by the virtual server in a virtual desktop system, where the virtual desktop displays local video information or a short message requested to be provided; and send the local video information or the short message to the virtual server.

The thin client in this embodiment may be connected to the voice communication telephone set through the telephone line interface 1, and forward communication between the voice communication telephone set and a PSTN telephone network by calling the forwarding unit 11, where the voice communication telephone set may be a POTS telephone set. As the POTS telephone set is widely applied, an expensive VoIP telephone set may not be used.

When the voice communication telephone set connected to the thin client in this embodiment initiates a call, the VoIP server sends, when receiving the call request of the voice communication telephone set, a trigger message to the virtual server to provide the virtual desktop for the thin client. When the trigger receiving unit 12 receives the virtual desktop sent by the virtual server to display, the user can operate the thin client through the mouse and the keyboard, and provide the local video information or the short message to the virtual server, so that the voice communication telephone set and the client in the enterprise network system are combined to perform communication.

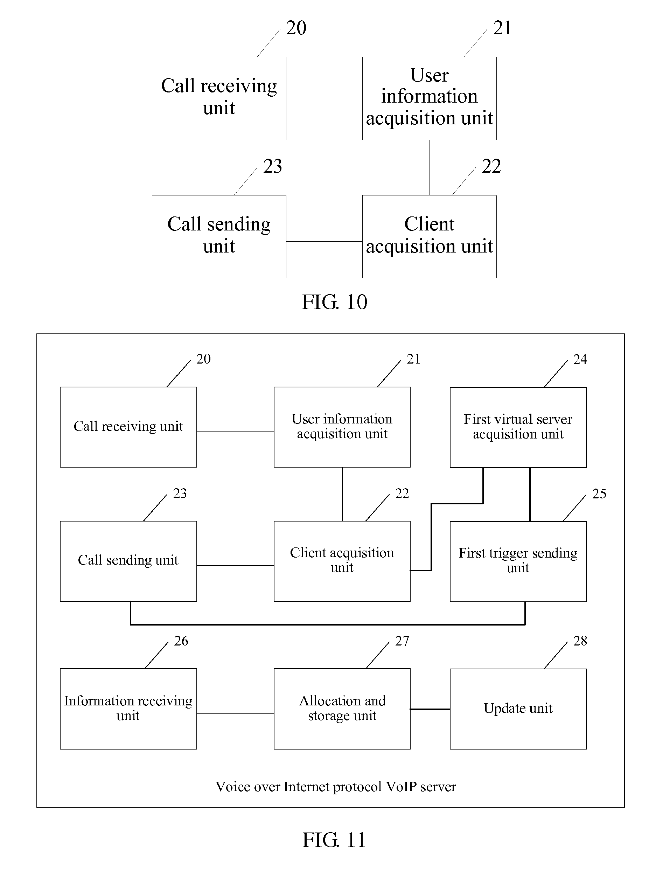

An embodiment of the present invention further provides a voice over Internet Protocol VoIP server, of which a schematic structural diagram is shown in FIG. 10, including:
a call receiving unit 20, configured to receive a call request;
a user information acquisition unit 21, configured to, if the call request received by the call receiving unit 20 contains a called extension number, acquire a called user identifier corresponding to the called extension number according to the called extension number in the call request received by the call receiving unit 20 and preset first correspondence between a user identifier and an extension number;
a client acquisition unit 22, configured to acquire, according to preset correspondence between a user identifier and client information, first client information corresponding to the called user identifier acquired by the user information acquisition unit 21; and
a call sending unit 23, configured to send the call request to a first client corresponding to the first client information acquired by the client acquisition unit 22, so that the first client forwards a call corresponding to the call request to a telephone set that has a voice communication function and is connected to the first client.

In this embodiment, the first correspondence between the user identifier and the extension number is preset in the VoIP server, and after the call receiving unit 20 receives the call request, if the call request contains the called extension number, the user information acquisition unit 21 acquires the called user identifier according to the called extension number contained in the call request and the preset first correspondence; the call sending unit 23 sends the call request to the first client corresponding to the called user identifier according to the first client information corresponding to the called user identifier acquired by the client acquisition unit 22. In this way, the first client can forward the call to the voice communication telephone set connected to the first client. In this embodiment, an extension number of a voice communication telephone set in an intranet is not fixed at an office seat, but vary according to different users. In this way, when a user moves the office seat, although the voice communication telephone set is changed, the extension number is not changed, thereby solving a problem of inconvenient use brought by association between the extension number and the office seat in the prior art.

Referring to FIG. 11, in a specific embodiment, in addition to the structure shown in FIG. 10, the VoIP server in the embodiment of the present invention may further include: a first virtual server acquisition unit 24, a first trigger sending unit 25, an information receiving unit 26, an allocation and storage unit 27, and an update unit 28.

The first virtual server acquisition unit 24 is configured to acquire an identifier of a first virtual server corresponding to the acquired first client according to the first client information acquired by the client acquisition unit 22 and preset second correspondence in a virtual desktop system between client identification information and virtual server identification information.

The first trigger sending unit 25 is configured to send a trigger message to the corresponding first virtual server according to the identifier of the first virtual server that is acquired by the first virtual server acquisition unit 24, and notify the call sending unit 23 of sending the call request to the corresponding first client.

The trigger message is used to trigger the first virtual server to provide the first client with video information or a short message relevant to the call request.

The information receiving unit 26 is configured to receive the user identifier and the first client information that are sent by the first virtual server in the virtual desktop system, where the user identifier and the first client information are contained in a user register request that is received by the first virtual server and is sent by the corresponding first client.

The allocation and storage unit 27 is configured to allocate one extension number to the user identifier received by the user receiving unit 26, store first correspondence between the received user identifier and the allocated extension number, and store correspondence between the received user identifier and the first client information.

The update unit 28 is configured to receive client information and the user identifier that are for logging in the first virtual server and are sent by the first virtual server, and update the first client information to client information for logging in the first virtual server, where the first client information corresponds to the user identifier for logging in the first virtual server and is in the correspondence between the user identifier and the client information, where the correspondence between the user identifier and the client information is stored in the allocation and storage unit 27.

In the server in this embodiment, the called extension number contained in the call request received by the call receiving unit 20 is a called extension number in the intranet.

After the client acquisition unit 22 acquires the first client information, the first virtual server acquisition unit 24 acquires the identifier of the first virtual server corresponding to the first client, and the first trigger sending unit 25 sends the trigger message, so as to trigger the first virtual server to provide the first client with the video information or the short message relevant to the call request, and notify the call sending unit 23 of sending the call request to the corresponding first client. In this way, communication is performed between units according to the procedure shown in FIG. 4. When the voice communication telephone set in the intranet answers the call, the VoIP server in this embodiment may send the trigger message to the associated virtual server to make the virtual server and the client work together, so that the voice communication telephone set and the client in the enterprise network system are combined to perform communication.

The first correspondence preset in the server in this embodiment is stored after the information receiving unit 26 receives the user identifier and the first client information, the allocation and storage unit 27 allocates a corresponding extension number to the received user identifier. And the allocation and storage unit 27 stores the correspondence between the user identifier and the first client information.

It should be noted that, after the update unit 28 receives the user identifier and the client information for logging in to the first virtual server, it is found that, the first client information that corresponds to the user identifier for logging in to the first virtual server and is in the correspondence that is between the user identifier and the client information and is stored in the allocation and storage unit 27 is inconsistent with the client information that is for logging in to the first virtual server and is received by the update unit 28, and then the update unit 28 may further update the first client information to the client information for logging in to the virtual server and received by the update unit 28, where the first client information corresponds to the user identifier for logging in to the first virtual server and is in the correspondence that is between the user identifier and the client information and is already stored in the first virtual server.

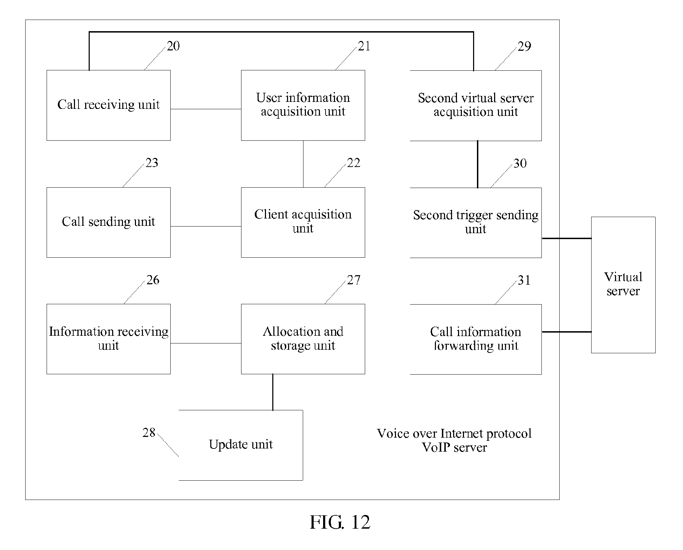

Referring to FIG. 12, in another specific embodiment, in addition to the structure shown in FIG. 10, the VoIP server may further include: a second virtual server acquisition unit 29, a second trigger sending unit 30, a call information forwarding unit 31, an information receiving unit 26, an allocation and storage unit 27, and an update unit 28.

The second virtual server acquisition unit 29 is configured to, if the call request received by the call receiving unit 20 contains information of a second client connected to a voice communication telephone set actively initiating a call, acquire an identifier of a second virtual server corresponding to the second client according to the information of the second client contained in the call request and preset second correspondence in a virtual desktop system between client identification information and virtual server identification information.

The second trigger sending unit 30 is configured to send a trigger message to the corresponding second virtual server according to the identifier of the second virtual server acquired by the second virtual server acquisition unit 29, where the trigger message is used to trigger the second virtual server to provide a virtual desktop for the second client, and request the second client to provide local video information or a short message.

The call information forwarding unit 31 is configured to forward, to a call peer end, the call request received by the call receiving unit 20, and the local video information or the short message that is provided by the second client and returned by the second virtual server.

In the server in this embodiment, the call request received by the call receiving unit 20 contains the information of the second client connected to the voice communication telephone set actively initiating a call.

The second virtual server acquisition unit 29 acquires the identifier of the second virtual server corresponding to the second client, and the second trigger sending unit 30 sends the trigger message, so as to trigger the second virtual server to provide the virtual desktop for the second client, and request the second client to provide the local video information or the short message; when the second virtual server returns the local video information or the short message provided by the second client, the call information forwarding unit 31 may forward the call request, and the local video information or the short message provided by the second client.

In this way, communication between the units of the server is performed according to the procedure shown in FIG. 5; when the voice communication telephone set such as the POTS telephone set in the intranet is dialed to call, the VoIP server may send the trigger message to the associated virtual server to make the virtual server and the client work together, so that the voice communication telephone set and the client in the enterprise network system are combined to perform communication.

The structure among the information receiving unit 26, the allocation and storage unit 27, and the update unit 28 in this embodiment is similar to the structure among the information receiving unit 26, the allocation and storage unit 27, and the update unit 28 in the server in FIG. 11, so the details are not described herein again.

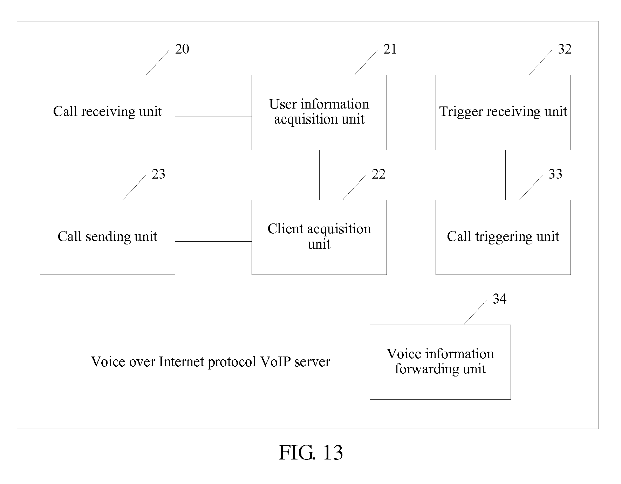

Referring to FIG. 13, in another specific embodiment, in addition to the structure shown in FIG. 10, the VoIP server may further include: a trigger receiving unit 32, a call triggering unit 33, and a voice information forwarding unit 34.

The trigger receiving unit 32 is configured to receive a trigger request sent by a virtual server in a virtual desktop system, where the trigger request is used to request triggering the VoIP server to call a voice communication telephone set connected to a client corresponding to the virtual server.

It can be understood that, the trigger request may include information of a client connected to a voice communication telephone set such as a POTS telephone set that needs to be triggered.

The call triggering unit 33 is configured to send a call to the corresponding client according to the trigger request received by the trigger receiving unit 32, so that the client forwards the call to the POTS telephone set connected to the client.

The voice information forwarding unit 34 is configured to send voice information in communication between the virtual server and the client to the called voice communication telephone set, and forward voice information of the voice communication telephone set to the virtual server corresponding to the client connected to the voice communication telephone set.

In this way, communication between the units of the VoIP server is performed according to the procedure shown in FIG. 6; when the client performs communication with the virtual server in the intranet, the call triggering unit 33 may trigger, according to the trigger message received by the trigger receiving unit 32, the VoIP server to call the voice communication telephone set connected to the corresponding client to work together, for example, to receive audio information, or to generate audio information through a microphone of the voice communication telephone set, so that the voice communication telephone set and the client in the enterprise network system are combined to perform communication.

An embodiment of the present invention further provides a communication system shown in FIG. 1, including: a voice over Internet protocol VoIP server, a virtual server, and at least one client, where the client is connected to the voice over Internet protocol VoIP server and the virtual server, and the client is further connected, through a telephone line interface, to a telephone set having a voice communication function. In this embodiment, it is taken for example that the client is connected to a plain old telephone service POTS telephone set.

The client is mainly configured to receive a call request sent by the VoIP server, forward, through the telephone line interface, a call corresponding to the call request to the POTS telephone set connected to the client; and forward a call of the POTS telephone set connected to the client to the VoIP server, where the client may be a thin client shown in FIG. 9.

The VoIP server is mainly configured to receive the call request; if the call request contains a called extension number, acquire a called user identifier corresponding to the called extension number according to the called extension number in the call request and preset first correspondence between a user identifier and an extension number; acquire, according to preset correspondence between a user identifier and client information, first client information corresponding to the called user identifier acquired by a user information acquisition unit; and send the call request to a first client corresponding to the first client information acquired by a client acquisition unit. Reference may be made to the VoIP server shown in FIG. 10 for the structure of the VoIP server.

In a specific embodiment, the structure of the VoIP server in the communication system may also be similar to the VoIP server shown in any one of FIG. 11 to FIG. 13.

Communication between clients, and between the server and the client in the communication system in this embodiment is performed according to the methods in the flowcharts shown in FIG. 3 to FIG. 8.

Persons of ordinary skill in the art can understand that all or part of the steps of the methods in the embodiments may be implemented by a program instructing relevant hardware. The program may be stored in a computer readable storage medium, and the storage medium may include a read only memory (ROM), a random access memory (RAM), a magnetic disk, an optical disk, or the like.

The communication method, system, and apparatus that are provided in the embodiments of the present invention are introduced in detail in the foregoing. In this document, specific examples are used for illustrating principles and implementation manners of the present invention. The foregoing descriptions of the embodiments are merely used to help understand the method and core idea of the present invention. Meanwhile, persons skilled in the art may make modifications to the specific implementation manner and application scope according to the idea of the present invention. In conclusion, the content of the specification shall not be construed as a limitation to the present invention.

## Claims

1. A communication method, comprising:
receiving a call request; and if the call request contains a called extension number, acquiring a called user identifier corresponding to the called extension number according to the called extension number and preset first correspondence between the user identifier and the extension number; and
according to preset correspondence between the user identifier and a client, acquiring first client information corresponding to the called user identifier, and sending the call request to a first client, so that the first client forwards a call corresponding to the call request to a telephone set that has a voice communication function and is connected to the first client.

2. The method according to claim 1, wherein before the receiving the call request, further comprising:
receiving the user identifier and the first client information that are sent by a first virtual server in a virtual desktop system, wherein the user identifier and the first client information are contained in a user register request, wherein the user register request received by the first virtual server is sent by the first client; and
allocating one extension number to the received user identifier, storing the first correspondence between the received user identifier and the allocated extension number, and storing correspondence between the user identifier and the first client information.

3. The method according to claim 2, further comprising:
receiving client information and the user identifier that are for logging in to the first virtual server and sent by the first virtual server, and updating the first client information to the client information for logging in to the first virtual server, wherein the first client information corresponds to the user identifier for logging in to the first virtual server and is in the correspondence between the user identifier and the client information.

4. The method according to any one of claims 1 to 3, wherein the client is a thin client in a virtual desktop system, and is connected, through a telephone interface, to the telephone set having the voice communication function.

5. The method according to any one of claims 1 to 4, wherein
after the acquiring the first client information corresponding to the called user identifier, the method further comprises:
acquiring an identifier of a first virtual server corresponding to the first client according to the acquired first client information and preset second correspondence in a virtual desktop system between client identification information and virtual server identification information; and
sending a trigger message to the first virtual server according to the acquired identifier of the first virtual server, wherein the trigger message is used to trigger the first virtual server to provide the first client with video information or a short message relevant to the call request.

6. The method according to any one of claims 1 to 4, wherein if the received call request contains information of a second client connected to a voice communication telephone set actively initiating a call, the method further comprises:
acquiring an identifier of a second virtual server corresponding to the second client according to the information of the second client contained in the call request and preset second correspondence in a virtual desktop system between client identification information and virtual server identification information;
sending a trigger message to the second virtual server according to the acquired identifier of the second virtual server, wherein the trigger message is used to trigger the second virtual server to provide a virtual desktop for the second client, and request the second client to provide local video information or a short message; and
forwarding, to a call peer end, the call request, and video information or a short message returned by the second virtual server.

7. A thin client, comprising a display screen, an interface connected to a mouse, and an interface connected to a keyboard, wherein the thin client further comprises: a telephone line interface connected to a voice communication telephone set, a call unit, and a forwarding unit, wherein
the call unit is configured to receive a call request sent by a voice over Internet protocol VoIP server, wherein the call request is sent after the VoIP server determines the thin client according to correspondence between a called extension number of a call corresponding to the call request and the client; and
the forwarding unit is configured to forward, according to the call request received by the call unit, the call request through the telephone line interface to a telephone set that has a voice communication function and is connected to the thin client; or forward, to the VoIP server, a call of a telephone set that has a voice communication function and is connected to the thin client.

8. A voice over Internet protocol VoIP server, comprising:
a call receiving unit, configured to receive a call request;
a user information acquisition unit, configured to, if the call request received by the call receiving unit contains a called extension number, acquire a called user identifier corresponding to the called extension number according to the called extension number in the call request and preset first correspondence between the user identifier and the extension number;
a client acquisition unit, configured to acquire, according to preset correspondence between the user identifier and client information, first client information corresponding to the called user identifier acquired by the user information acquisition unit; and
a call sending unit, configured to send the call request to a first client corresponding to the first client information acquired by the client acquisition unit, so that the first client forwards a call corresponding to the call request to a telephone set that has a voice communication function and is connected to the first client.

9. The VoIP server according to claim 8, further comprising:
an information receiving unit, configured to receive the user identifier and the first client information that are sent by a first virtual server in a virtual desktop system, wherein the user identifier and the first client information are contained in a user register request, wherein the user register request received by the first virtual server is sent by the corresponding first client;
an allocation and storage unit, configured to allocate one extension number to the user identifier received by the user receiving unit, store the first correspondence between the received user identifier and the allocated extension number, and store correspondence between the received user identifier and the first client information.

10. The VoIP server according to claim 9, further comprising:
an update unit, configured to receive client information and the user identifier that are for logging in to the first virtual server and are sent by the first virtual server, and update the first client information to the client information for logging in to the first virtual server, wherein the first client information corresponds to the user identifier for logging in to the first virtual server and is in the correspondence that is between the user identifier and the client information and is stored in the allocation and storage unit.

11. The VoIP server according to any one of claims 8 to 10, further comprising:
a first virtual server acquisition unit, configured to acquire an identifier of a first virtual server corresponding to the acquired first client according to the first client information acquired by the client acquisition unit and preset second correspondence in a virtual desktop system between client identification information and virtual server identification information; and
a first trigger sending unit, configured to send a trigger message to the corresponding first virtual server according to the identifier of the first virtual server acquired by the first virtual server acquisition unit, and notify the call sending unit of sending the call request to the corresponding first client, wherein the trigger message is used to trigger the first virtual server to provide the first client with video information or a short message relevant to the call request.

12. The VoIP server according to any one of claims 8 to 10, further comprising:
a second virtual server acquisition unit, configured to, if the call request received by the call receiving unit contains information of a second client connected to a voice communication telephone set actively initiating a call, acquire an identifier of a second virtual server corresponding to the second client according to the information of the second client contained in the call request and preset second correspondence in a virtual desktop system between client identification information and virtual server identification information;
a second trigger sending unit, configured to send a trigger message to the corresponding second virtual server according to the identifier of the second virtual server acquired by the second virtual server acquisition unit, wherein the trigger message is used to trigger the second virtual server to provide a virtual desktop for the second client, and request the second client to provide local video information or a short message; and
a call information forwarding unit, configured to forward, to a call peer end, the call request, and the local video information or the short message that is provided by the second client and returned by the second virtual server.

13. A communication system, comprising: a voice over Internet protocol VoIP server, a virtual server, and at least one client, wherein the client is connected to the voice over Internet protocol VoIP server and the virtual server, and the client is further connected, through a telephone line interface, to a telephone set having a voice communication function;
the client is configured to receive a call request sent by the VoIP server; forward, through the telephone line interface, a call corresponding to the call request to the telephone set that has the voice communication function and is connected to the client; and forward, to the VoIP server, a call of the telephone set that has the voice communication function and is connected to the client; and
the voice over Internet protocol VoIP server is configured to receive the call request; wherein the call request contains a called extension number, acquire a called user identifier corresponding to the called extension number according to the called extension number in the call request and preset first correspondence between the user identifier and the extension number; acquire, according to preset correspondence between the user identifier and client information, first client information corresponding to the called user identifier acquired by a user information acquisition unit; and send the call request to a first client corresponding to the first client information acquired by a client acquisition unit.

14. The communication system according to claim 13, wherein the VoIP server comprises:
a call receiving unit, configured to receive the call request;
the user information acquisition unit, configured to, if the call request received by the call receiving unit contains the called extension number, acquire the called user identifier corresponding to the called extension number according to the called extension number in the call request and the preset first correspondence between the user identifier and the extension number;
the client acquisition unit, configured to acquire, according to the preset correspondence between the user identifier and the client information, the first client information corresponding to the called user identifier acquired by the user information acquisition unit; and
a call sending unit, configured to send the call request to the first client corresponding to the first client information acquired by the client acquisition unit, so that the first client forwards a call corresponding to the call request to a telephone set that has a voice communication function and is connected to the first client.

15. The communication system according to claim 13 or 14, wherein the VoIP server further comprises:
an information receiving unit, configured to receive a user identifier and first client information that are sent by a virtual server in a virtual desktop system, wherein the user identifier and the first client information are contained in a user register request that is received by the virtual server and is sent by the first client; and
an allocation and storage unit, configured to allocate one extension number of a voice communication telephone set to the user identifier received by a user receiving unit, store first correspondence between the received user identifier and the allocated extension number, and store correspondence between the received user identifier and the first client information.

16. The communication system according to any of claims 13 to 15, wherein the VoIP server further comprises:
an update unit, configured to receive client information and a user identifier that are for logging in to the virtual server and are sent by the virtual server, and update the first client information to the client information for logging in to the virtual server, wherein the first client information corresponds to the user identifier for logging in to the first virtual server and is in the correspondence that is between the user identifier and client information and is stored in the allocation and storage unit.
